# EUROPÄISCHE PATENTSCHRIFT

(11) **EP 4 471 659 B1**
(45) Veröffentlichungstag und Bekanntmachung des Hinweises auf die Patenterteilung: **23.04.2025**
(21) Anmeldenummer: 23175995.2
(22) Anmeldetag: 30.05.2023
(51) Int. Cl.: G06K 7/10, B65G 43/08

(54) **ERFASSUNGSVORRICHTUNG ZUR IDENTIFIKATION EINES VON EINER FÖRDEREINRICHTUNG TRANSPORTIERTEN OBJEKTS**
DETECTION DEVICE FOR IDENTIFYING AN OBJECT TRANSPORTED BY A CONVEYOR
DISPOSITIF DE DÉTECTION POUR IDENTIFIER UN OBJET TRANSPORTÉ PAR UN DISPOSITIF DE TRANSPORT

(43) Veröffentlichungstag der Anmeldung: 04.12.2024
(73) Patentinhaber: SICK AG, 79183 Waldkirch (DE)
(72) Erfinder: SCHÜTZ, Frank, 79365 Rheinhausen (DE)
(74) Vertreter: Manitz Finsterwald Patent- und Rechtsanwaltspartnerschaft mbB

(56) Entgegenhaltungen:
- US-A1- 2008 136 623
- US-A1- 2017 186 124

## Beschreibung

Die Erfindung betrifft eine Erfassungsvorrichtung, insbesondere einen Codeleser, vorzugsweise einen Barcode-Scanner, mit einer Identifikationseinheit zur Identifikation eines von einer Fördereinrichtung, insbesondere einem Stetigförderer, weiter insbesondere einem Rollenförderer, transportierten Objekts, sowie ein Verfahren zur Identifikation eines von einer Fördereinrichtung transportierten Objekts.

Beispielsweise in Werkhallen oder Logistikzentren ist es für einen koordinierten Ablauf wichtig, dass der Aufenthaltsort eines Objekts, wie zum Beispiel eines Pakets, bekannt ist. Gewöhnlich kommen hierzu an Fördereinrichtungen installierte Erfassungsvorrichtungen zum Einsatz, welche das Objekt mittels einer Identifikationseinheit identifizieren und, da der Standort der Erfassungsvorrichtung bekannt ist, damit eine Ortung des Objekts ermöglichen.

Dabei ist es üblich, die Identifikationseinheit lediglich dann zu aktivieren, wenn sich das Objekt auch tatsächlich in der Nähe der Erfassungsvorrichtung befindet. Ein dauerhafter Betrieb der Identifikationseinheit kann hingegen, insbesondere bei Laser-basierten Identifikationseinheiten, die Lebensdauer der Erfassungsvorrichtung unnötig reduzieren, da die Gefahr für einen Defekt, beispielsweise eines Codelesesensors der Identifikationseinheit, steigt.

Daher sind Erfassungsvorrichtung mit Lichtschranken bekannt, die ein herannahendes Objekt durch den Einsatz einer Lichtschranke detektieren, wobei lediglich bei einer Detektion die Identifikationseinheit rechtzeitig aktiviert wird, um das Objekt zu identifizieren. Die US 2008/136623 A1 offenbart eine Erfassungsvorrichtung gemäß dem Oberbegriff des Anspruchs 1. Eine weitere Erfassungsvorrichtung ist aus der US 2017/186124 A1 bekannt.

Nachteilig an dieser bekannten Lösung zur Identifikation des Objekts ist allerdings, dass für jede Erfassungsvorrichtung eine separat anzuordnende Lichtschranke vorgesehen werden muss, womit auch ein zusätzlicher Installationsaufwand für die Erfassungsvorrichtung, insbesondere für die Lichtschranke und die Identifikationseinheit an sich, sowie für die zusätzliche benötigte Verkabelung, und ein zusätzlicher Wartungsaufwand eines solchen Systems einhergeht.

Der Erfindung liegt daher die Aufgabe zugrunde, eine Vorrichtung zur Identifikation eines von einer Fördereinrichtung transportierten Objekts zu schaffen, welche Vorrichtung einen einfachen Aufbau aufweist, wobei die Nachteile des Stands der Technik nicht auftreten.

Diese Aufgabe wird durch eine Erfassungsvorrichtung mit den Merkmalen des Anspruchs 1 gelöst, und insbesondere dadurch dass die Erfassungsvorrichtung zumindest ein erstes Mikrofon aufweist und dazu ausgebildet ist, mittels zumindest des ersten Mikrofons das Objekt, insbesondere beim Transport, vorzugsweise während einer, insbesondere Geräusche verursachenden, Bewegung während des Transports, akustisch zu detektieren, und lediglich bei einer Detektion des Objekts einen Identifikationsvorgang zur Identifikation des Objekts mittels der Identifikationseinheit anzustoßen.

Auf Grund der akustischen Detektion mittels zumindest des ersten Mikrofons ist die erfindungsgemäße Erfassungsvorrichtung dazu ausgebildet, die Anwesenheit des Objekts, insbesondere in einem Bereich, in welchem das Objekt durch die Identifikationseinheit identifiziert werden kann, ohne die Notwendigkeit einer Lichtschranke rechtzeitig zu detektieren. Die Detektion kann dabei so rechtzeitig erfolgen, dass der Identifikationsvorgang angestoßen und das Objekt durch die Identifikationseinheit identifiziert werden kann, bevor sich das Objekt auf Grund des Transports von der Erfassungsvorrichtung wieder entfernt. Hierdurch vereinfacht sich der Aufbau der Erfassungsvorrichtung sowie der Installations- und Wartungsaufwand. Da die Erfassungsvorrichtung ferner dazu ausgebildet ist, lediglich bei einer Detektion des Objekts einen Identifikationsvorgang des Objekts mittels der Identifikationseinheit anzustoßen, kann die Lebensdauer der Erfassungsvorrichtung erhöht und deren Energieverbrauch reduziert werden.

Die akustische Detektion kann beispielsweise auf einem von dem Objekt selbst erzeugten Geräusch beruhen. Die akustische Detektion kann aber auch auf einem Geräusch beruhen, welches bei einer Bewegung während des Transports verursacht wird, beispielsweise einem Rollgeräusch eines Rollenförderers. Ebenfalls denkbar ist, dass die akustische Detektion auch auf einem Geräusch beruht, welches von einer anderen Schallquelle erzeugt wird und auf welches das Objekt einwirkt. Dabei kann es sich bei dem Geräusch beispielsweise um einen Industrielärm in einer Werkhalle handeln, welcher von dem Objekt gegenüber dem Mikrofon abgeschirmt wird. Folglich können je nach Anwendungsfall verschiedene Geräusche zur Detektion herangezogen werden, wobei maßgeblich ist, dass das Geräusch von dem Objekt hinreichend charakterisierend beeinflusst wird, sodass die Anwesenheit des Objekts akustisch wahrnehmbar ist. Insofern werden diese und auch andere Geräusche, welche im Sinne der Erfindung im Zusammenhang mit der Detektion des Objekts stehen, allgemein als ein von dem Objekt beeinflusstes Geräusch bezeichnet.

Die "Anwesenheit" bezeichnet dabei insbesondere die Anwesenheit in einem Bereich, in welchem das Objekt durch die Identifikationseinheit identifiziert werden kann.

Vorteilhafte Ausgestaltungen der Erfindung ergeben sich aus den Unteransprüchen, der Beschreibung und den Figuren.

Es kann vorgesehen sein, dass die Identifikationseinheit einen Codelesesensor zur Identifikation des Objekts umfasst. Die Identifikationseinheit kann für einen Betrieb in einem inaktiven Zustand, in welchem der Codelesesensor inaktiv ist und/oder eine Messwertausgabe des Codelesesensors nicht verarbeitet wird, und für einen Betrieb einem aktiven Zustand, in welchem der Codelesesensor aktiv ist und/oder die Messwertausgabe des Codelesesensors verarbeitet wird, ausgebildet sein, wobei die Erfassungsvorrichtung dazu ausgebildet ist, bei der Detektion des Objekts die Identifikationseinheit aus dem inaktiven Zustand in den aktiven Zustand zu versetzen. Hierdurch kann bei einer Detektion eine zuverlässige Identifikation des Objekts erfolgen. Da der Codelesesensor grundsätzlich nur aktiv ist, wenn das Objekt zuvor detektiert wurde, kann die Lebensdauer des Codelesesensors erhöht werden. Bei Ausgestaltungen mit einem für einen dauerhaften Betrieb ausgelegten Codelesesensor, kann, wenn lediglich die Messwertausgabe des Codelesesensors nicht verarbeitet wird, auf Grund der ausgesetzten Verarbeitung ebenfalls der Energieverbrauch reduziert und auch die Lebensdauer anderer Komponenten der Erfassungsvorrichtung, wie beispielsweise eines für die Verarbeitung der Codelesesensordaten zuständigen Prozessors, erhöht werden.

Vorzugsweise ist die Identifikationseinheit dazu ausgebildet, insbesondere mittels des Codelesesensors, einen an dem Objekt angebrachten Code, mittels welchem Code das Objekt identifizierbar ist, auszulesen, insbesondere um das Objekt zu identifizieren. Mittels des Codes können dem Objekt spezifische Informationen auf einfache Weise zugeordnet werden. Deren Auslesung durch die Identifikationseinheit ermöglicht somit eine besonders einfache und zuverlässige Identifikation des Objekts.

Bevorzugt ist der Codelesesensor als ein optischer Sensor, insbesondere als Laser-Scanner, als Kamera-Scanner und/oder als LED-Scanner, ausgeführt. Der Codelesesensor kann eine Lichtquelle, beispielsweise einen Laser, umfassen, mit welchem das Objekt beleuchtet wird. Die Beleuchtung erfolgt bevorzugt linienförmig. Alternativ kann der Codelesesensor auch als ein elektromagnetischer Sensor, insbesondere als ein RFID Lesegerät, ausgeführt sein. Derartige Sensoren ermöglichen eine besonders zuverlässige Identifikation des Objekts.

Vorteilhafterweise umfasst die Erfassungsvorrichtung definiert beabstandet zu dem ersten Mikrofon ein zweites Mikrofon und ist dazu ausgebildet, auch mittels des zweiten Mikrofons das Objekt, insbesondere beim Transport, vorzugsweise während einer, insbesondere Geräusche verursachenden, Bewegung während des Transports, akustisch zu detektieren. Das erste Mikrofon und das zweite Mikrofon können dabei gleich/identisch ausgebildet sein. Mittels des ersten Mikrofons, des zweiten Mikrofons und des bekannten definierten Abstands zwischen diesen kann die Detektion des Objekts verbessert werden.

Die Erfassungsvorrichtung ist dazu ausgebildet, mittels zumindest des ersten Mikrofons, und insbesondere des zweiten Mikrofons, insbesondere jeweils, eine Lautstärke und eine Tonhöhe eines von dem Objekt beeinflussten Geräuschs, insbesondere eines Transportgeräuschs des Objekts, aufzuzeichnen und auszuwerten, um das Objekt zu detektieren. Die Detektion erfolgt somit anhand zweier Messgrößen, wodurch die Zuverlässigkeit der Detektion steigt.

Weiter kann die Erfassungsvorrichtung dazu ausgebildet sein, auf Grundlage der von dem ersten Mikrofon und dem zweiten Mikrofon jeweils aufgezeichneten Lautstärke und/oder Tonhöhe mittels Triangulation und/oder Beamforming eine Entfernung zwischen dem Objekt und der Erfassungsvorrichtung und/oder eine Position des Objekts und/oder eine Geschwindigkeit des Objekts und/oder eine Bewegungsrichtung, insbesondere eine Transportrichtung, des Objekts zu berechnen. Des Weiteren kann die Erfassungsvorrichtung dazu ausgebildet sein, die berechnete Entfernung vorteilhaft zu einer Einstellung eines Autofokus oder einer Scanfrequenz der Identifikationseinheit, insbesondere des optischen Sensors, zu nutzten und/oder über die berechnete Geschwindigkeit mit Vorteil die Geschwindigkeit der Fördereinrichtung zu bestimmen. Ferner kann die Erfassungsvorrichtung dazu ausgebildet sein, mittels zumindest des ersten Mikrofons einen Stillstand der Fördereinrichtung zu erkennen. Insbesondere kann die Erfassungsvorrichtung zur Detektion noch weitere Mikrofone in Form eines Mikrofon-Arrays umfassen, wodurch die Zuverlässigkeit der Detektion, insbesondere mittels Beamforming, noch weiter erhöht werden kann. Durch das Beamforming können Geräusche aus einem erwarteten Raumbereich, in welchem die Anwesenheit des Objekts detektiert werden soll, verstärkt und Geräusche aus anderen Raumbereichen gedämpft werden.

Die Erfassungvorrichtung kann auch dazu ausgebildet sein, über die berechnete Entfernung zwischen dem Objekt und der Erfassungsvorrichtung eine Unregelmäßigkeit im Betriebsablauf zu erkennen, um erweitere Diagnosemöglichkeiten bereitzustellen. So kann beispielsweise ein am Rand der Fördereinrichtung transportiertes Objekt beim Passieren der Erfassungseinrichtung erkannt werden, bevor das Objekt beispielsweise von der Fördereinrichtung fällt.

Bevorzugt ist die Erfassungsvorrichtung dazu ausgebildet, das Objekt zu detektieren, wenn die Entfernung einen vorbestimmten Entfernungswert unterschreitet und/oder das Objekt eine vorgegebenen Positionswert erreicht. Insbesondere hierdurch kann die Funktion einer Lichtschranke virtuell umgesetzt werden, da beispielsweise bei Erreichen des vorbestimmten Entfernungswerts, bei welchem bei herkömmlichen Systemen eine Lichtschranke eingesetzt wird, die erfindungsgemäße Detektion erfolgen kann.

Die Erfassungsvorrichtung ist dazu ausgebildet, das Objekt zu detektieren, wenn die Lautstärke einen vordefinierten ersten Grenzwert und die Tonhöhe einen vordefinierten zweiten Grenzwert durchtreten. Eine Detektion erfolgt also grundsätzlich nur dann, wenn für beide Messgrößen der jeweilige Grenzwert zugleich durchtreten ist. Dabei kommt es nicht darauf an, dass die Grenzwerte zeitgleich durchtreten werden, sondern lediglich, dass die beiden Kriterien zugleich erfüllt sind. Hierdurch kann die Zuverlässigkeit der Detektion weiter erhöht werden. Falls die Erfassungsvorrichtung auch dazu ausgebildet ist, das Objekt zu detektieren, wenn eine Entfernung zwischen dem Objekt und der Erfassungsvorrichtung einen vorbestimmten Entfernungswert unterschreitet und/oder das Objekt eine vorgegebenen Positionswert erreicht, kann die Erfassungsvorrichtung dazu ausgebildet sein, dies als zusätzliches Kriterium neben dem Durchtreten der Lautstärke des vordefinierten ersten Grenzwerts und der Tonhöhe des vordefinierten zweiten Grenzwerts anzuwenden, wobei die Erfassungsvorrichtung in einer solchen Ausgestaltung dazu ausgebildet sein kann, dass eine Detektion dann nur erfolgt, wenn alle Kriterien zugleich erfüllt sind. Hierdurch kann die Zuverlässigkeit der Detektion noch weiter erhöht werden.

Mit Vorteil ist die Erfassungsvorrichtung dazu ausgebildet, nach der Identifikation des Objekts, wenn die Lautstärke einen vordefinierten dritten Grenzwert und die Tonhöhe einen vordefinierten vierten Grenzwert durchtreten, wenn nach der Identifikation eine voreingestellte Wartezeit abgelaufen ist, wenn nach dem Anstoßen des Identifikationsvorgangs eine voreingestellte Abschaltzeit abgelaufen ist, wenn die Entfernung einen vorbestimmten zweiten Entfernungswert überschreitet und/oder wenn das Objekt eine vorgegebenen zweiten Positionswert erreicht, den Identifikationsvorgang zu beenden. Hierdurch kann auf einfache Weise die Lebensdauer der Erfassungsvorrichtung erhöht und deren Energieverbrauch reduziert werden.

Weiter mit Vorteil kann die Erfassungsvorrichtung dazu ausgebildet sein, zum Beenden des Identifikationsvorgangs die Identifikationseinheit aus dem aktiven Zustand in den inaktiven Zustand zu versetzten.

Bevorzugt sind die Grenzwerte derart vordefiniert, dass die Grenzwerte zueinander eine Korrelation aufweisen, welche Korrelation einen auf dem Dopplereffekt beruhende Beziehung zwischen der Lautstärke und der Tonhöhe des von dem Objekt beeinflussten Geräuschs, insbesondere des Transportgeräuschs des Objekts, beim Passieren der Erfassungsvorrichtung berücksichtigt. Beispielsweise können die Schallwellen des von dem Objekt beeinflussten Geräuschs in Bewegungsrichtung des Objekts gestaucht werden, wenn sich das Objekt der Erfassungsvorrichtung nähert. Dadurch kann, wenn sich das Objekt der Erfassungsvorrichtung nähert, die aufgezeichnete Lautstärke steigen, wobei die aufgezeichnete Tonhöhe höher sein kann, als wenn sich das Objekt auf Höhe der Erfassungsvorrichtung befindet. Ein lediglich lauter werdendes Geräusch, das die entsprechende Tonhöhe nicht aufweist, könnte dann hingegen nicht zu einer Detektion führen. Da die aufgezeichnete Lautstärke und Tonhöhe also grundsätzlich nur dann zu einer Detektion führen, wenn diese dem Dopplereffekt bei dem sich der Erfassungsvorrichtung nähernden Objekt entsprechend korrelieren, kann die Zuverlässigkeit der Detektion noch weiter verbessert werden.

Vorteilhafterweise kann die Erfassungsvorrichtung ein Speichermodul umfassen, auf welchem die Lautstärke und die Tonhöhe aufgezeichnet werden. Alternativ oder zusätzlich können die Grenzwerte, die Wartezeit, die Abschaltzeit, der Entfernungswert, und insbesondere der zweite Entfernungswert, und/oder der Positionswert, und insbesondere der zweite Positionswert, insbesondere herstellerseitig, auf dem Speichermodul hinterlegt sein. Weiter alternativ oder zusätzlich kann die Erfassungsvorrichtung dazu ausgebildet sein, dass die Grenzwerte, die Wartezeit, die Abschaltzeit, der Entfernungswert, und insbesondere der zweite Entfernungswert, und/oder der Positionswert, und insbesondere der zweite Positionswert, bei einem Installationsvorgang der Erfassungsvorrichtung festgelegt werden. Insbesondere kann das Speichermodul für einen elektronischen Datenaustausch mit einem externen Gerät ausgebildet sein. Hierdurch kann auf einfache Weise auf die jeweils benötigten Daten zugegriffen werden, wobei der elektronische Datenaustausch auch eine Bereitstellung der auf dem Speichermodul befindlichen Daten beispielsweise an eine andere Erfassungsvorrichtung ermöglicht.

Bevorzugt ist die Erfassungsvorrichtung dazu ausgebildet ist, bei dem Installationsvorgang, bei welchem das Objekt zumindest einmal die Erfassungsvorrichtung passiert, mittels zumindest des ersten Mikrofons, und insbesondere des zweiten Mikrofons, insbesondere jeweils, für jedes Passieren des Objekts die Lautstärke des von dem Objekt beeinflussten Geräuschs als ein, insbesondere jeweiliges, erstes Referenzmuster und die Tonhöhe des von dem Objekt beeinflussten Geräuschs als ein, insbesondere jeweiliges, zweites Referenzmuster in dem Speichermodul abzuspeichern, und über das zumindest eine, insbesondere jeweilige, erste Referenzmuster den ersten Grenzwert, und insbesondere den dritten Grenzwert, zu bestimmen, und über das zumindest eine, insbesondere jeweilige, zweite Referenzmuster den zweiten Grenzwert, und insbesondere den vierten Grenzwert, zu bestimmen. Hierdurch können auf besonders einfache Weise die Grenzwerte auf das von dem Objekt beeinflusste Geräusch abgestimmt werden, wodurch die Zuverlässigkeit der Detektion verbessert werden kann.

Vorteilhafterweise ist die Erfassungsvorrichtung dazu ausgebildet, die Lautstärke des von dem Objekt beeinflussten Geräuschs mit dem zumindest einen, insbesondere jeweiligen, ersten Referenzmuster und die Tonhöhe des von dem Objekt beeinflussten Geräuschs mit dem zumindest einen, insbesondere jeweiligen, zweiten Referenzmuster zu vergleichen und in Abhängigkeit einer Übereinstimmung des Vergleichs das Objekt zu detektieren und/oder den Identifikationsvorgang zu beenden und/oder die Identifikation zu verwerfen. Hierdurch kann beispielsweise eine Identifikation wieder verworfen werden, wenn der Vergleich ergibt, dass die Detektion fälschlicherweise erfolgte, wodurch das Risiko einer fehlerhaften Identifikation verringert werden kann. Der tatsächlich erforderliche Grad, d.h. beispielsweise der Wert der Übereinstimmung, hängt insbesondere von der jeweiligen gewünschten Zuverlässigkeit der Detektion ab und kann auf einfache Weise beispielsweise experimentell ermittelt werden.

Bevorzugt weist die Erfassungsvorrichtung eine Hardwareschnittstelle auf und ist dazu ausgebildet, die Identifikation über die Hardwareschnittstelle, insbesondere an eine Industrieanlage zur Weiterverarbeitung der Identifikation, vorzugsweise zur Ortung des identifizierten Objekts über den bekannten Ort der Erfassungsvorrichtung, auszugeben. Dadurch kann die Identifikation auf einfache Weise ausgegeben und weiterverarbeitet werden.

Mit Vorteil weist die Erfassungsvorrichtung ein Gehäuse auf, in welchem Gehäuse die Identifikationseinheit und zumindest das erste Mikrofon, und insbesondere das zweite Mikrofon und/oder das Speichermodul, angeordnet sind. Hierdurch ergibt sich eine besonders kompakte und einfache Bauweise der Erfassungsvorrichtung, wobei sich außerdem auch der Installationsaufwand verringert.

Vorteilhafterweise ist die Erfassungsvorrichtung dazu ausgebildet, die Lautstärke und Tonhöhe eines von dem Objekt beeinflussten Geräuschs, insbesondere vor einer weiteren Auswertung, mittels einem oder mehrerer Filter aus einem Umgebungsgeräusch der Erfassungsvorrichtung, insbesondere Industrielärm, herauszufiltern. Hierzu können insbesondere auf das jeweilige Referenzmuster abgestimmte Filter vorgesehen sein.

Darüber hinaus kann die Erfassungsvorrichtung dazu ausgebildet sein, mittels zumindest des ersten Mikrofons außerplanmäßige Zustände einer die Erfassungsvorrichtung umgebenden Anlage, beispielsweise über ein Ertönen einer Warnsirene der Fördereinrichtung, akustisch zu erkennen und den erkannten außerplanmäßigen Zustand mit einem mittels zumindest des ersten Mikrofons erkannten Stillstand der Fördereinrichtung zeitlich zu korrelieren. Dadurch kann die Erfassungsvorrichtung eine transparente Fehleranalyse ermöglichen.

Die Erfindung betrifft ferner ein Verfahren zur Identifikation eines von einer Fördereinrichtung, insbesondere einem Stetigförderer, weiter insbesondere einem Rollenförderer, transportierten Objekts, insbesondere mittels einer einer der vorhergehenden Ausführungen entsprechenden Erfassungsvorrichtung, wobei das Objekt, insbesondere beim Transport, akustisch detektiert wird und lediglich bei einer Detektion des Objekts ein Identifikationsvorgang zur Identifikation des Objekts angestoßen wird.

Generell gelten die Ausführungen zu der erfindungsgemäßen Erfassungsvorrichtung für das erfindungsgemäße Verfahren entsprechend, dies gilt insbesondere hinsichtlich Ausführungsformen und Vorteilen. Zudem versteht es sich, dass sämtliche hierin genannten Merkmale miteinander kombinierbar sind, außer es ist explizit etwas Gegenteiliges angegeben.

Die Erfindung wird im Folgenden beispielhaft unter Bezugnahme auf die Figuren beschrieben. Es zeigen schematisch
- Fig. 1: eine aus dem Stand der Technik bekannte Erfassungsvorrichtung,
- Fig. 2: eine erfindungsgemäße Erfassungsvorrichtung, und
- Fig. 3: einen zeitlichen Verlauf von Lautstärke und Tonhöhe am Ort der Erfassungsvorrichtung beim Transport des Objekts.

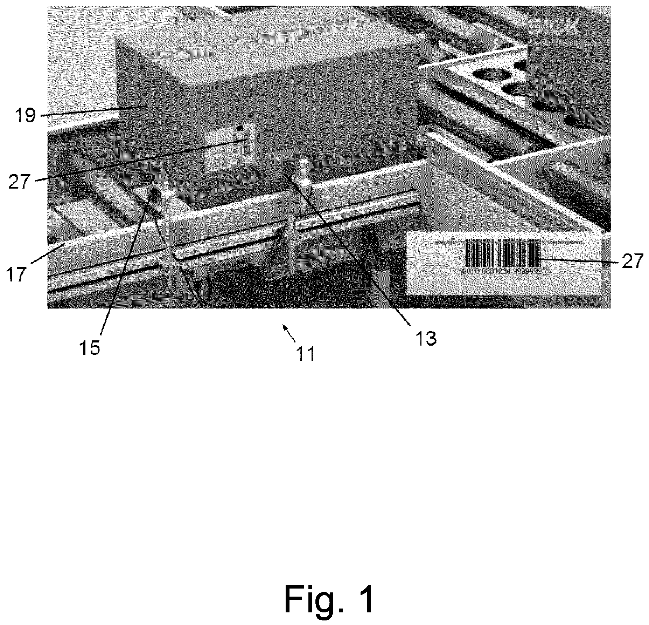

Fig. 1 zeigt eine aus dem Stand der Technik bekannte Erfassungsvorrichtung 11 mit einer an einer Fördereinrichtung 17 installierten Identifikationseinheit 13. Die Identifikationseinheit 13 ist dazu ausgebildet, ein von der Fördereinrichtung 17 transportiertes Objekt 19 beim Transport zu identifizieren. Hierzu ist das Objekt 19 mit einem Barcode 27 versehen, mittels welchem dem Objekt 19 spezifische Informationen auf einfache Weise zugeordnet werden können. Eine vergrößerte Ansicht des Barcodes 27 ist in Fig. 1 rechts unten zusätzlich dargestellt. Die Identifikationseinheit 13 ist dazu ausgebildet, den Barcode 27 auszulesen, so dass das Objekt 19 über den Barcode 27 identifizierbar ist. Um die Lebensdauer der Erfassungsvorrichtung 11 nicht unnötig zu verringern, ist die Identifikationseinheit 13 lediglich dann aktiviert, wenn sich das Objekt 19 auch tatsächlich in der Nähe der Erfassungsvorrichtung 11 befindet. Hierzu umfasst die Erfassungsvorrichtung 11 in einem ausreichend großen Abstand zur Identifikationseinheit 13 eine Lichtschranke 15, mittels welcher die Erfassungsvorrichtung 11 das herannahende Objekt 19 detektieren kann und lediglich bei einer Detektion die Identifikationseinheit 13 so rechtzeitig aktiviert, dass diese durch das Auslesen des Barcodes 27 das Objekt 19 identifizieren kann, bevor das Objekt 19 die Erfassungsvorrichtung 11 passiert hat.

Nachteilig an dieser bekannten Lösung zur Identifikation des Objekts 19 ist allerdings, dass für jede Erfassungsvorrichtung 11 eine Lichtschranke 15 vorgesehen werden muss, womit auch ein zusätzlicher Installationsaufwand für die Erfassungsvorrichtung 11, insbesondere für die Lichtschranke 15 und die Identifikationseinheit 13 an sich, sowie für die zusätzliche benötigte Verkabelung, und ein zusätzlicher Wartungsaufwand einer solchen Erfassungsvorrichtung 11 einhergeht.

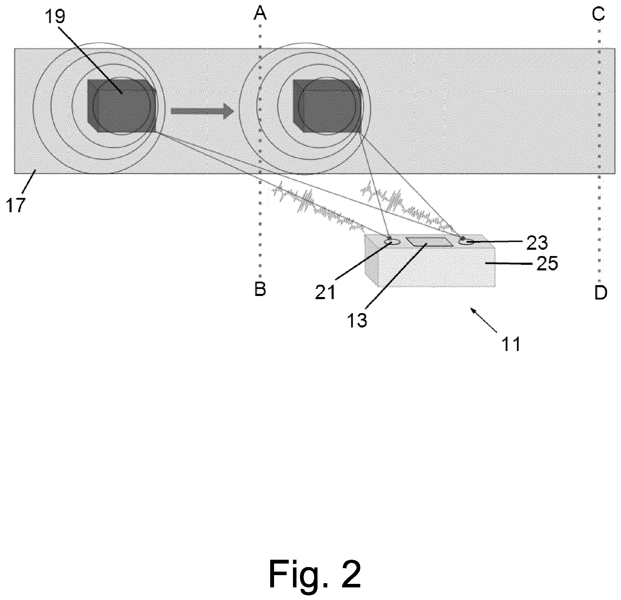

Fig. 2 zeigt eine erfindungsgemäße Erfassungsvorrichtung 11 in Form eines stationären Barcode-Scanners. Die Erfassungsvorrichtung 11 ist seitlich an einer Fördereinrichtung 17 angeordnet, welche ein Objekt 19 in Form eines Pakets in die durch den Pfeil illustrierte Richtung transportiert. Die Erfassungsvorrichtung 11 umfasst eine Identifikationseinheit 13 zur Identifikation des von der Fördereinrichtung 17 transportierten Objekts 19 sowie ein erstes Mikrofon 21. Die Erfassungsvorrichtung 11 ist dazu ausgebildet, mittels zumindest des ersten Mikrofons 21 das Objekt 19 während einer Geräusche verursachenden Bewegung während des Transports akustisch zu detektieren, und lediglich bei einer Detektion des Objekts 19 einen Identifikationsvorgang zur Identifikation des Objekts 19 mittels der Identifikationseinheit 13 anzustoßen.

Die Identifikationseinheit 13 umfasst einen Codelesesensor (nicht dargestellt) in Form eines Laser-Scanners zur Identifikation des Objekts 19. Die Identifikationseinheit 13 ist für einen Betrieb in einem inaktiven Zustand, in welchem der Codelesesensor inaktiv ist, und für einen Betrieb einem aktiven Zustand, in welchem der Codelesesensor aktiv ist, ausgebildet. Die Erfassungsvorrichtung 11 ist dazu ausgebildet, bei einer Detektion des Objekts 19 die Identifikationseinheit 13 aus dem inaktiven Zustand in den aktiven Zustand zu versetzen. Dazu umfasst die Erfassungsvorrichtung 11 eine nicht dargestellte Steuereinrichtung. Ferner ist die Identifikationseinheit 13 dazu ausgebildet, mittels des Codelesesensors einen an dem Objekt 19 angebrachten Code (nicht dargestellt), mittels welchem Code das Objekt 19 identifizierbar ist, auszulesen, um das Objekt 19 zu identifizieren.

Außerdem weist die Erfassungsvorrichtung 11 definiert beabstandet zu dem ersten Mikrofon 21 ein zweites Mikrofon 23 auf und ist dazu ausgebildet, auch mittels des zweiten Mikrofons 23 das Objekt 19 während einer Geräusche verursachenden Bewegung während des Transports akustisch zu detektieren. Das erste Mikrofon 21 und das zweite Mikrofon 23 können dabei gleich ausgebildet sein.

Die Erfassungsvorrichtung 11 ist dazu ausgebildet, mittels des ersten Mikrofons 21 und des zweiten Mikrofons 23 jeweils eine Lautstärke und eine Tonhöhe eines von dem Objekt 19 beeinflussten Geräuschs aufzuzeichnen und auszuwerten, um das Objekt 19 zu detektieren. Bei dem von dem Objekt 19 beeinflussten Geräusch handelt es sich bei dem in Fig. 2 gezeigten Ausführungsbeispiel um ein Transportgeräusch des Objekts 19, welches durch die um das Objekt 19 gezogenen Kreise illustriert wird.

Des Weiteren ist die Erfassungsvorrichtung 11 dazu ausgebildet, über die von dem ersten Mikrofon 21 und dem zweiten Mikrofon 23 jeweils aufgezeichnete Lautstärke mittels Triangulation auf Grundlage der Laufzeitunterschiede zu dem ersten Mikrofon 21 und dem zweiten Mikrofon 23, der Schallgeschwindigkeit und des bekannten definierten Abstands zwischen dem ersten Mikrofon 21 und dem zweiten Mikrofon 23 eine Entfernung zwischen dem Objekt 19 und der Erfassungsvorrichtung 11 zu berechnen.

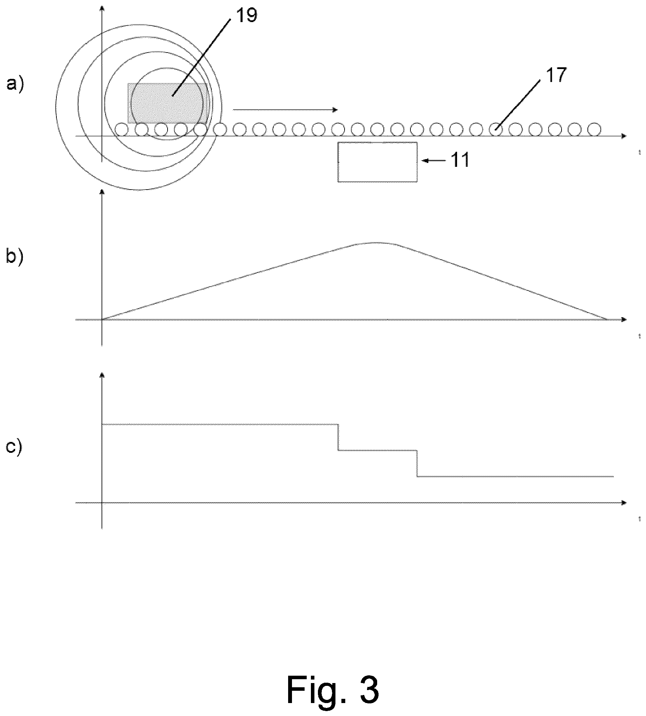

In Fig. 3 ist beispielhaft für das in Fig. 2 gezeigte Ausführungsbeispiel ein zeitlicher Verlauf der Lautstärke (b)) und der Tonhöhe (c)) dargestellt, wie sie am Ort der Erfassungsvorrichtung 11 von einem der Mikrofone 21, 23 aufgezeichnet werden, wenn das Objekt 19 wie mittels des Pfeils illustriert von der Fördereinrichtung 17 transportiert die Erfassungsvorrichtung 11 passiert (a)). Das Passieren umfasst, dass sich das Objekt 19 der Erfassungsvorrichtung 11 nähert, sich auf deren Höhe befindet, und sich wieder von dieser entfernt. Nähert sich das Objekt 19 der Erfassungsvorrichtung 11, steigt die Lautstärke, wobei die Tonhöhe - da die Schallwellen des von dem Objekt 19 beeinflussten Geräuschs in dem gezeigten Ausführungsbeispiel in Bewegungsrichtung des Objekts 19 gestaucht werden - höher ist, als wenn sich das Objekt 19 auf Höhe der Erfassungsvorrichtung 11 befindet. Befindet sich das Objekt 19 auf Höhe der Erfassungsvorrichtung 11, erreicht die Lautstärke ein Maximum, die Tonhöhe ist hingegen niedriger als während des Näherns. Entfernt sich das Objekt 19 wieder von der Erfassungsvorrichtung 11, nimmt die Laustärke ab, wobei die Tonhöhe - da die Schallwellen des von dem Objekt 19 beeinflussten Geräuschs in dem gezeigten Ausführungsbeispiel entgegen der Bewegungsrichtung des Objekts 19 gestreckt werden - niedriger ist, als wenn sich das Objekt 19 auf Höhe der Erfassungsvorrichtung 11 befindet.

Für eine besonders zuverlässige Detektion des Objekts 19 ist die Erfassungsvorrichtung 11 des gezeigten Ausführungsbeispiels dazu ausgebildet, das Objekt nur dann zu detektieren, wenn die nachfolgenden drei Kriterien zugleich erfüllt sind:
Sind ein vordefinierter erster Grenzwert von der Lautstärke und ein vordefinierter zweiter Grenzwert von der Tonhöhe zugleich überschritten, so sind ein entsprechendes erstes Kriterium und ein entsprechendes zweites Kriterium zur Detektion des Objekts 19 zugleich erfüllt. Dabei kommt es nicht darauf an, dass die Grenzwerte tatsächlich zeitgleich überschritten werden, sondern lediglich, dass beide Kriterien zugleich erfüllt sind. In diesem Ausführungsbeispiel sind der erste Grenzwert und der zweite Grenzwert derart vordefiniert, dass die beiden Grenzwerte zueinander eine Korrelation aufweisen, welche Korrelation eine auf dem Dopplereffekt beruhende Beziehung zwischen der Lautstärke und der Tonhöhe des von dem Objekt 19 beeinflussten Geräuschs beim Nähern der Erfassungsvorrichtung 11 gemäß der Illustration aus Fig. 3 berücksichtigt. Ist zugleich ein vorbestimmter Entfernungswert von der berechneten Entfernung unterschritten, ist zugleich ein entsprechendes drittes Kriterium erfüllt.

In einer ersten Situation in Fig. 2 ist das Objekt 19 für die Detektion noch zu weit von der Erfassungsvorrichtung 11 entfernt, da der erste Grenzwert und der zweite Grenzwert derart vordefiniert sind und der Entfernungswert derart vorbestimmt ist, dass die entsprechenden vorstehenden Kriterien auf Grund des von dem Objekt 19 beeinflussten Geräuschs beim Nähern der Erfassungsvorrichtung 11 erst zugleich erfüllt sind, wenn das Objekt 19 die durch die Linie AB illustrierte Lage erreicht. Die Detektion in dieser Lage aktiviert die Identifikationseinheit 13 dabei so rechtzeitig, dass diese das Objekt 19 identifizieren kann, bevor das Objekt 19 die Erfassungsvorrichtung 11 passiert hat.

In einer zweiten Situation in Fig. 2 hat das Objekt 19 eine Lage erreicht, in welcher die vorstehenden Kriterien zugleich erfüllt sind, wodurch die Detektion des Objekts 19 erfolgte. Somit ist die Identifikationseinheit 13 in der zweiten Situation in den aktiven Zustand versetzt und bereit, mittels des Codelesesensors den an dem Objekt 19 angebrachten Code auszulesen. Dies geschieht bei diesem Ausführungsbeispiel, wenn sich das Objekt 19 auf Höhe der Erfassungsvorrichtung 11 befindet.

Ferner ist die Erfassungsvorrichtung 11 dazu ausgebildet, wenn die Lautstärke einen vordefinierten dritten Grenzwert und die Tonhöhe einen vordefinierten vierten Grenzwert unterschreiten, mittels der Steuereinrichtung den Identifikationsvorgang zu beenden und die Identifikationseinheit 13 aus dem aktiven Zustand in den inaktiven Zustand zu versetzten. Hierzu kommt es jedoch erst, wenn das Objekt 19 die durch die Linie CD illustrierte Lage erreicht, da der dritte Grenzwert und der vierte Grenzwert derart vordefiniert sind, dass der dritte Grenzwert und der vierte Grenzwert auf Grund des von dem Objekt 19 beeinflussten Geräuschs beim Entfernen von der Erfassungsvorrichtung 11 erst ab der Lage CD zugleich unterschritten sind. Beispielsweise kann es sich bei dem ersten und dritten, sowie dem zweiten und vierten Grenzwert um identische Grenzwerte handeln.

Die Erfassungsvorrichtung 11 umfasst zudem ein Speichermodul (nicht dargestellt), auf welchem Speichermodul die Lautstärke und die Tonhöhe aufgezeichnet werden, wobei die Erfassungsvorrichtung 11 dazu ausgebildet ist, dass die Grenzwerte und der Entfernungswert bei einem Installationsvorgang der Erfassungsvorrichtung 11 festgelegt werden. Hierfür ist die Erfassungsvorrichtung 11 dazu ausgebildet, bei dem Installationsvorgang, bei welchem das Objekt 19 zumindest einmal die Erfassungsvorrichtung 11 passiert, mittels des ersten Mikrofons 21 und des zweiten Mikrofons 23 jeweils für jedes Passieren des Objekts 19 die Lautstärke des von dem Objekt 19 beeinflussten Geräuschs als ein jeweiliges erstes Referenzmuster und die Tonhöhe des von dem Objekt 19 beeinflussten Geräuschs als ein jeweiliges zweites Referenzmuster in dem Speichermodul abzuspeichern, und über das zumindest eine jeweilige erste Referenzmuster den ersten Grenzwert und den dritten Grenzwert zu bestimmen, und über das zumindest eine jeweilige zweite Referenzmuster den zweiten Grenzwert und den vierten Grenzwert zu bestimmen. Bei dem Installationsvorgang des in Fig. 2 gezeigten Ausführungsbeispiels passierte das Objekt 19 dreimal die Erfassungsvorrichtung zur Festlegung der Grenzwerte. Der Entfernungswert wurde in Abstimmung auf den auf diese Weise festgelegten ersten und zweiten Grenzwert von einem Bediener der Erfassungsvorrichtung 11 manuell eingeben und so von der Erfassungsvorrichtung 11 festgelegt.

Außerdem ist die Erfassungsvorrichtung 11 dazu ausgebildet, die Lautstärke des von dem Objekt 19 beeinflussten Geräuschs mit den drei jeweiligen ersten Referenzmustern und die Tonhöhe des von dem Objekt 19 beeinflussten Geräuschs mit den drei jeweiligen zweiten Referenzmustern zu vergleichen und in Abhängigkeit einer Übereinstimmung des Vergleichs die Identifikation zu verwerfen. Hierdurch kann beispielsweise eine Identifikation wieder verworfen werden, wenn der Vergleich ergibt, dass die Detektion fälschlicherweise erfolgte, wodurch das Risiko einer fehlerhaften Identifikation verringert werden kann.

Die Erfassungsvorrichtung 11 weist zudem eine Hardwareschnittstelle (nicht dargestellt) auf und ist dazu ausgebildet, die Identifikation über die Hardwareschnittstelle an eine Industrieanlage zur Ortung des identifizierten Objekts 19 über den bekannten Ort der Erfassungsvorrichtung 11 auszugeben. Des Weiteren umfasst die Erfassungsvorrichtung 11 ein Gehäuse 25, in welchem Gehäuse 25 die Identifikationseinheit 13, das erste Mikrofon 21, das zweite Mikrofon 23, das Speichermodul, und die Hardwareschnittstelle angeordnet sind. Hierdurch ergibt sich eine besonders kompakte und einfache Bauweise der Erfassungsvorrichtung 11, wobei sich außerdem auch der Installationsaufwand verringert.

### Bezugszeichenliste

- 11: Erfassungsvorrichtung
- 13: Identifikationseinheit
- 15: Lichtschranke
- 17: Fördereinrichtung
- 19: Objekt
- 21: erstes Mikrofon
- 23: zweites Mikrofon
- 25: Gehäuse

## Patentansprüche

1. Erfassungsvorrichtung (11), insbesondere Codeleser, mit einer Identifikationseinheit (13) zur Identifikation eines von einer Fördereinrichtung (17), insbesondere einem Stetigförderer, weiter insbesondere einem Rollenförderer, transportierten Objekts (19),
wobei die Erfassungsvorrichtung (11) zumindest ein erstes Mikrofon (21) aufweist und dazu ausgebildet ist, mittels zumindest des ersten Mikrofons (21) das Objekt (19), insbesondere beim Transport, akustisch zu detektieren, und lediglich bei einer Detektion des Objekts (19) einen Identifikationsvorgang des Objekts (19) mittels der Identifikationseinheit (13) anzustoßen, wobei die Erfassungsvorrichtung (11) dazu ausgebildet ist, mittels zumindest des ersten Mikrofons (21) eine Lautstärke und eine Tonhöhe eines von dem Objekt (19) beeinflussten Geräuschs, insbesondere eines Transportgeräuschs des Objekts (19), aufzuzeichnen und auszuwerten, um das Objekt (19) zu detektieren,
**dadurch gekennzeichnet,**
**dass** die Erfassungsvorrichtung (11) dazu ausgebildet ist, das Objekt (19) zu detektieren, wenn die Lautstärke einen vordefinierten ersten Grenzwert und die Tonhöhe einen vordefinierten zweiten Grenzwert durchtreten.

2. Erfassungvorrichtung (11) nach Anspruch 1, wobei die Identifikationseinheit (13) einen Codelesesensor zur Identifikation des Objekts (19) umfasst und für einen Betrieb in einem inaktiven Zustand, in welchem der Codelesesensor inaktiv ist und/oder eine Messwertausgabe des Codelesesensors nicht verarbeitet wird, und für einen Betrieb einem aktiven Zustand, in welchem der Codelesesensor aktiv ist und/oder die Messwertausgabe des Codelesesensors verarbeitet wird, ausgebildet ist, und wobei die Erfassungsvorrichtung (11) dazu ausgebildet ist, bei einer Detektion des Objekts (19) die Identifikationseinheit (13) aus dem inaktiven Zustand in den aktiven Zustand zu versetzen.

3. Erfassungsvorrichtung (11) nach Anspruch 1 oder 2, wobei die Identifikationseinheit (13) dazu ausgebildet ist, insbesondere mittels des Codelesesensors, einen an dem Objekt (19) angebrachten Code, mittels welchem Code das Objekt (19) identifizierbar ist, auszulesen.

4. Erfassungsvorrichtung (11) nach Anspruch 2 oder 3, wobei der Codelesesensor als ein optischer Sensor, insbesondere als Laser-Scanner, als Kamera-Scanner und/oder als LED-Scanner, ausgeführt ist oder wobei der Codelesesensor als ein elektromagnetischer Sensor, insbesondere als ein RFID Lesegerät, ausgeführt ist.

5. Erfassungsvorrichtung (11) nach einem der vorhergehenden Ansprüche, wobei die Erfassungsvorrichtung (11) definiert beabstandet zu dem ersten Mikrofon (21) ein zweites Mikrofon (23) aufweist und dazu ausgebildet ist, mittels des zweiten Mikrofons (23) das Objekt (19), insbesondere beim Transport, akustisch zu detektieren

6. Erfassungsvorrichtung (11) nach Anspruch 5, wobei die Erfassungsvorrichtung (11) dazu ausgebildet ist, mittels zumindest des ersten Mikrofons (21) und des zweiten Mikrofons (23), insbesondere jeweils, die Lautstärke und die Tonhöhe des von dem Objekt (19) beeinflussten Geräuschs, insbesondere des Transportgeräuschs des Objekts (19), aufzuzeichnen und auszuwerten, um das Objekt (19) zu detektieren.

7. Erfassungsvorrichtung (11) nach Anspruch 6, wobei die Erfassungsvorrichtung (11) dazu ausgebildet ist, auf Grundlage der von dem ersten Mikrofon (21) und dem zweiten Mikrofon (23) jeweils aufgezeichneten Lautstärke und/oder Tonhöhe mittels Triangulation eine Entfernung zwischen dem Objekt (19) und der Erfassungsvorrichtung (11) und/oder eine Position des Objekts (19) und/oder eine Geschwindigkeit des Objekts (19) zu berechnen.

8. Erfassungsvorrichtung (11) nach Anspruch 7, wobei die Erfassungsvorrichtung (11) dazu ausgebildet ist, das Objekt (19) zu detektieren, wenn die Entfernung einen vorbestimmten Entfernungswert unterschreitet und/oder das Objekt (19) eine vorgegebenen Positionswert erreicht.

9. Erfassungsvorrichtung (11) nach einem der vorhergehenden Ansprüche, wobei die Erfassungsvorrichtung (11) dazu ausgebildet ist, nach der Identifikation des Objekts (19), wenn die Lautstärke einen vordefinierten dritten Grenzwert und die Tonhöhe einen vordefinierten vierten Grenzwert durchtreten, wenn nach der Identifikation eine voreingestellte Wartezeit abgelaufen ist, wenn nach dem Anzustoßen des Identifikationsvorgangs eine voreingestellte Abschaltzeit abgelaufen ist, wenn die Entfernung einen vorbestimmten zweiten Entfernungswert überschreitet und/oder wenn das Objekt (19) eine vorgegebenen zweiten Positionswert erreicht, den Identifikationsvorgang zu beenden, wobei die Erfassungsvorrichtung (11) insbesondere dazu ausgebildet ist, zum Beenden des Identifikationsvorgangs die Identifikationseinheit (13) aus dem aktiven Zustand in den inaktiven Zustand zu versetzten.

10. Erfassungsvorrichtung (11) nach einem der vorhergehenden Ansprüche, wobei die Grenzwerte derart vordefiniert sind, dass die Grenzwerte zueinander eine Korrelation aufweisen, welche Korrelation einen auf dem Dopplereffekt beruhende Beziehung zwischen der Lautstärke und der Tonhöhe des von dem Objekt (19) beeinflussten Geräuschs, insbesondere des Transportgeräuschs des Objekts (19), beim Passieren der Erfassungsvorrichtung (11) berücksichtigt.

11. Erfassungsvorrichtung (11) nach einem der vorhergehenden Ansprüche, wobei die Erfassungsvorrichtung (11) ein, insbesondere für einen elektronischen Datenaustausch mit einem externen Gerät ausgebildetes, Speichermodul umfasst, auf welchem Speichermodul die Lautstärke und die Tonhöhe aufgezeichnet werden und/oder die Grenzwerte, die Wartezeit, die Abschaltzeit, der Entfernungswert, und insbesondere der zweite Entfernungswert, und/oder der Positionswert, und insbesondere der zweite Positionswert, insbesondere herstellerseitig, hinterlegt sind und/oder wobei die Erfassungsvorrichtung (11) dazu ausgebildet ist, dass die Grenzwerte, die Wartezeit, die Abschaltzeit, der Entfernungswert, und insbesondere der zweite Entfernungswert, und/oder der Positionswert, und insbesondere der zweite Positionswert, bei einem Installationsvorgang der Erfassungsvorrichtung (11) festgelegt werden.

12. Erfassungsvorrichtung (11) nach Anspruch 11, wobei die Erfassungsvorrichtung (11) dazu ausgebildet ist, bei dem Installationsvorgang, bei welchem das Objekt (19) zumindest einmal die Erfassungsvorrichtung (11) passiert, mittels zumindest des ersten Mikrofons (21), und insbesondere des zweiten Mikrofons (23), insbesondere jeweils, für jedes Passieren des Objekts (19) die Lautstärke des von dem Objekt (19) beeinflussten Geräuschs als ein, insbesondere jeweiliges, erstes Referenzmuster und die Tonhöhe des von dem Objekt (19) beeinflussten Geräuschs als ein, insbesondere jeweiliges, zweites Referenzmuster in dem Speichermodul abzuspeichern, und über das zumindest eine, insbesondere jeweilige, erste Referenzmuster den ersten Grenzwert, und insbesondere den dritten Grenzwert, zu bestimmen, und über das zumindest eine, insbesondere jeweilige, zweite Referenzmuster den zweiten Grenzwert, und insbesondere den vierten Grenzwert, zu bestimmen.

13. Erfassungsvorrichtung (11) nach Anspruch 12, wobei die Erfassungsvorrichtung (11) dazu ausgebildet ist, die Lautstärke des von dem Objekt (19) beeinflussten Geräuschs mit dem zumindest einen, insbesondere jeweiligen, ersten Referenzmuster und die Tonhöhe des von dem Objekt (19) beeinflussten Geräuschs mit dem zumindest einen, insbesondere jeweiligen, zweiten Referenzmuster zu vergleichen und in Abhängigkeit einer Übereinstimmung des Vergleichs das Objekt (19) zu detektieren, den Identifikationsvorgang zu beenden und/oder die Identifikation zu verwerfen.

14. Erfassungsvorrichtung (11) nach einem der vorhergehenden Ansprüche, wobei die Erfassungsvorrichtung (11) ein Gehäuse (25) aufweist, in welchem Gehäuse (25) die Identifikationseinheit (13) und zumindest das erste Mikrofon (21), insbesondere das zweite Mikrofon (21) und/oder das Speichermodul, angeordnet sind.

15. Verfahren zur Identifikation eines von einer Fördereinrichtung (17), insbesondere einem Stetigförderer, weiter insbesondere einem Rollenförderer, transportierten Objekts (19) mittels einer einem der vorhergehenden Ansprüche entsprechenden Erfassungsvorrichtung (11), wobei das Objekt (19), insbesondere beim Transport, akustisch detektiert wird und lediglich bei einer Detektion des Objekts (19) ein Identifikationsvorgang zur Identifikation des Objekts (19) angestoßen wird.

## Claims

1. A detection apparatus (11), in particular a code reader, comprising an identification unit (13) for identifying an object (19) transported by a conveying device (17), in particular a continuous conveyor, further in particular a roller conveyor,
wherein the detection apparatus (11) has at least a first microphone (21) and is configured to detect the object (19) acoustically, in particular during transport, by means of at least the first microphone (21), and to initiate an identification process of the object (19) by means of the identification unit (13) only when the object (19) is detected,
wherein the detection apparatus (11) is configured to record and evaluate a volume and a pitch of a sound influenced by the object (19), in particular a transport sound of the object (19), by means of at least the first microphone (21) in order to detect the object (19),
**characterized in that**
the detection apparatus (11) is configured to detect the object (19) when the volume exceeds a predefined first limit value and the pitch exceeds a predefined second limit value.

2. A detection apparatus (11) according to claim 1, wherein the identification unit (13) comprises a code reading sensor for identifying the object (19) and is configured for an operation in an inactive state, in which the code reading sensor is inactive and/or a measurement value output of the code reading sensor is not processed, and for an operation in an active state, in which the code reading sensor is active and/or the measurement value output of the code reading sensor is processed, and wherein the detection apparatus (11) is configured to transfer the identification unit (13) from the inactive state to the active state when the object (19) is detected.

3. A detection apparatus (11) according to claim 1 or 2, wherein the identification unit (13) is configured to read out a code applied to the object (19), by means of which code the object (19) can be identified, in particular by means of the code reading sensor.

4. A detection apparatus (11) according to claim 2 or 3, wherein the code reading sensor is designed as an optical sensor, in particular as a laser scanner, as a camera scanner and/or as an LED scanner, or wherein the code reading sensor is designed as an electromagnetic sensor, in particular as an RFID reading device.

5. A detection apparatus (11) according to any one of the preceding claims, wherein the detection apparatus (11) has a second microphone (23) at a defined spacing from the first microphone (21) and is configured to detect the object (19) acoustically, in particular during transport, by means of the second microphone (23).

6. A detection apparatus (11) according to claim 5, wherein the detection apparatus (11) is configured to record and evaluate the volume and the pitch of the sound influenced by the object (19), in particular the transport sound of the object (19), by means of at least the first microphone (21) and the second microphone (23), in particular in each case, in order to detect the object (19).

7. A detection apparatus (11) according to claim 6, wherein the detection apparatus (11) is configured to calculate a distance between the object (19) and the detection apparatus (11) and/or a position of the object (19) and/or a speed of the object (19) by means of triangulation on the basis of the volume and/or pitch recorded by the first microphone (21) and the second microphone (23) in each case.

8. A detection apparatus (11) according to claim 7, wherein the detection apparatus (11) is configured to detect the object (19) when the distance falls below a predetermined distance value and/or the object (19) reaches a predefined position value.

9. A detection apparatus (11) according to any one of the preceding claims, wherein the detection apparatus (11) is configured to terminate the identification process after the identification of the object (19) if the volume exceeds a predefined third limit value and the pitch exceeds a predefined fourth limit value, if a preset waiting time has elapsed after the identification, if a preset switch-off time has elapsed after the initiation of the identification process, if the distance exceeds a predetermined second distance value and/or if the object (19) reaches a predefined second position value, wherein the detection apparatus (11) is in particular configured to transfer the identification unit (13) from the active state to the inactive state in order to terminate the identification process.

10. A detection apparatus (11) according to any one of the preceding claims, wherein the limit values are predefined such that the limit values have a correlation to one another, which correlation takes into account a relationship based on the Doppler effect between the volume and the pitch of the sound influenced by the object (19), in particular the transport sound of the object (19), when passing the detection apparatus (11).

11. A detection apparatus (11) according to any one of the preceding claims, wherein the detection apparatus (11) comprises a memory module, in particular configured for an electronic data exchange with an external device, on which memory module the volume and the pitch are recorded and/or the limit values, the waiting time, the switch-off time, the distance value, and in particular the second distance value, and/or the position value, and in particular the second position value, are stored, in particular by the manufacturer, and/or wherein the detection apparatus (11) is configured so that the limit values, the waiting time, the switch-off time, the distance value, and in particular the second distance value, and/or the position value, and in particular the second position value, are defined during an installation process of the detection apparatus (11).

12. A detection apparatus (11) according to claim 11, wherein the detection apparatus (11) is configured, during the installation process in which the object (19) passes the detection apparatus (11) at least once, to store, for each passing of the object (19), the volume of the sound influenced by the object (19) as a, in particular respective, first reference pattern and the pitch of the sound influenced by the object (19) as a, in particular respective, second reference pattern in the memory module by means of at least the first microphone (21), and in particular the second microphone (23), in particular in each case, and to determine the first limit value, and in particular the third limit value, via the at least one, in particular respective, first reference pattern and to determine the second limit value, and in particular the fourth limit value, via the at least one, in particular respective, second reference pattern.

13. A detection apparatus (11) according to claim 12, wherein the detection apparatus (11) is configured to compare the volume of the sound influenced by the object (19) with the at least one, in particular respective, first reference pattern and the pitch of the sound influenced by the object (19) with the at least one, in particular respective, second reference pattern and, depending on a match of the comparison, to detect the object (19), to terminate the identification process and/or to reject the identification.

14. A detection apparatus (11) according to any one of the preceding claims, wherein the detection apparatus (11) has a housing (25), in which housing (25) the identification unit (13) and at least the first microphone (21), in particular the second microphone (21) and/or the memory module, are arranged.

15. A method for identifying an object (19) transported by a conveying device (17), in particular a continuous conveyor, further in particular a roller conveyor, by means of a detection apparatus (11) corresponding to any one of the preceding claims, wherein the object (19) is detected acoustically, in particular during transport, and an identification process for identifying the object (19) is only initiated when the object (19) is detected.

## Revendications

1. Dispositif de détection (11), en particulier lecteur de code, comprenant une unité d'identification (13) pour identifier un objet (19) transporté par un dispositif de transport (17), en particulier par un convoyeur en continu, plus particulièrement par un convoyeur à rouleaux,
dans lequel
le dispositif de détection (11) comprend au moins un premier microphone (21) et est conçu pour détecter acoustiquement l'objet (19), en particulier lors du transport, au moyen d'au moins le premier microphone (21), et pour déclencher un processus d'identification de l'objet (19) au moyen de l'unité d'identification (13) uniquement lors d'une détection de l'objet (19),
le dispositif de détection (11) est conçu pour enregistrer et évaluer, au moyen d'au moins le premier microphone (21), un volume sonore et une hauteur de son d'un bruit influencé par l'objet (19), en particulier d'un bruit de transport de l'objet (19), afin de détecter l'objet (19),
**caractérisé en ce que**
le dispositif de détection (11) est conçu pour détecter l'objet (19) si le volume sonore franchit une première valeur limite prédéfinie et si la hauteur de son franchit une deuxième valeur limite prédéfinie.

2. Dispositif de détection (11) selon la revendication 1,
dans lequel l'unité d'identification (13) comprend un capteur de lecture de code pour identifier l'objet (19) et est conçu pour un fonctionnement dans un état inactif, dans lequel le capteur de lecture de code est inactif et/ou une sortie de valeur de mesure du capteur de lecture de code n'est pas traitée, et pour un fonctionnement dans un état actif, dans lequel le capteur de lecture de code est actif et/ou la sortie de valeur de mesure du capteur de lecture de code est traitée, et
le dispositif de détection (11) est conçu pour faire passer l'unité d'identification (13) de l'état inactif à l'état actif lors d'une détection de l'objet (19).

3. Dispositif de détection (11) selon la revendication 1 ou 2,
dans lequel l'unité d'identification (13) est conçue pour lire, en particulier au moyen du capteur de lecture de code, un code apposé sur l'objet (19), code au moyen duquel l'objet (19) est identifiable.

4. Dispositif de détection (11) selon la revendication 2 ou 3,
dans lequel le capteur de lecture de code est réalisé sous la forme d'un capteur optique, en particulier d'un scanner laser, d'un scanner à caméra et/ou d'un scanner à DEL, ou
le capteur de lecture de code est réalisé sous la forme d'un capteur électromagnétique, en particulier d'un lecteur RFID.

5. Dispositif de détection (11) selon l'une des revendications précédentes, dans lequel le dispositif de détection (11) comprend un deuxième microphone (23), situé à une distance définie du premier microphone (21), et est conçu pour détecter acoustiquement l'objet (19), en particulier lors du transport, au moyen du deuxième microphone (23).

6. Dispositif de détection (11) selon la revendication 5,
dans lequel le dispositif de détection (11) est conçu pour enregistrer et évaluer, au moyen d'au moins le premier microphone (21) et du deuxième microphone (23), en particulier respectivement, le volume sonore et la hauteur de son du bruit influencé par l'objet (19), en particulier du bruit de transport de l'objet (19), afin de détecter l'objet (19).

7. Dispositif de détection (11) selon la revendication 6,
dans lequel le dispositif de détection (11) est conçu pour calculer par triangulation une distance entre l'objet (19) et le dispositif de détection (11) et/ou une position de l'objet (19) et/ou une vitesse de l'objet (19), en se basant sur le volume sonore et/ou sur la hauteur de son enregistrés respectivement par le premier microphone (21) et par le deuxième microphone (23).

8. Dispositif de détection (11) selon la revendication 7,
dans lequel le dispositif de détection (11) est conçu pour détecter l'objet (19) si la distance est inférieure à une valeur de distance prédéterminée et/ou si l'objet (19) atteint une valeur de position prédéterminée.

9. Dispositif de détection (11) selon l'une des revendications précédentes,
dans lequel le dispositif de détection (11) est conçu pour terminer le processus d'identification après l'identification de l'objet (19), si le volume sonore franchit une troisième valeur limite prédéfinie et si la hauteur du son franchit une quatrième valeur limite prédéfinie, lorsqu'un temps d'attente préréglé s'est écoulé après l'identification, lorsqu'un temps de coupure préréglé s'est écoulé après le déclenchement du processus d'identification, si la distance dépasse une deuxième valeur de distance prédéterminée et/ou si l'objet (19) atteint une deuxième valeur de position prédéterminée,
en particulier, le dispositif de détection (11) est conçu pour faire passer l'unité d'identification (13) de l'état actif à l'état inactif pour terminer le processus d'identification.

10. Dispositif de détection (11) selon l'une des revendications précédentes, dans lequel les valeurs limites sont prédéfinies de telle sorte que les valeurs limites présentent une corrélation entre elles, la corrélation tenant compte d'une relation, basée sur l'effet Doppler, entre le volume sonore et la hauteur de son du bruit influencé par l'objet (19), en particulier du bruit de transport de l'objet (19), lors du passage devant le dispositif de détection (11).

11. Dispositif de détection (11) selon l'une des revendications précédentes, dans lequel le dispositif de détection (11) comprend un module de mémoire, conçu en particulier pour un échange de données électroniques avec un appareil externe, module de mémoire sur lequel sont enregistrés le volume sonore et la hauteur de son et/ou sur lequel sont stockés, en particulier par le fabricant, les valeurs limites, le temps d'attente, le temps de coupure, la valeur de distance et en particulier la deuxième valeur de distance et/ou la valeur de position et en particulier la deuxième valeur de position, et/ou le dispositif de détection (11) est conçu fixer, lors d'un processus d'installation du dispositif de détection (11), les valeurs limites, le temps d'attente, le temps de coupure, la valeur de distance et en particulier la deuxième valeur de distance et/ou la valeur de position et en particulier la deuxième valeur de position.

12. Dispositif de détection (11) selon la revendication 11,
dans lequel le dispositif de détection (11) est conçu pour, lors du processus d'installation au cours duquel l'objet (19) passe au moins une fois devant le dispositif de détection (11), stocker dans le module de mémoire, au moyen d'au moins le premier microphone (21) et en particulier du deuxième microphone (23), en particulier respectivement, pour chaque passage de l'objet (19), le volume sonore du bruit influencé par l'objet (19) en tant que premier modèle de référence, en particulier respectif, et pour stocker la hauteur de son du bruit influencé par l'objet (19) en tant que deuxième modèle de référence, en particulier respectif, et pour déterminer la première valeur limite et en particulier la troisième valeur limite par l'intermédiaire dudit au moins un premier modèle de référence, en particulier respectif, et pour déterminer la deuxième valeur limite et en particulier la quatrième valeur limite par l'intermédiaire dudit au moins un deuxième modèle de référence, en particulier respectif.

13. Dispositif de détection (11) selon la revendication 12,
dans lequel le dispositif de détection (11) est conçu pour comparer le volume sonore du bruit influencé par l'objet (19) avec ledit au moins un premier modèle de référence, en particulier respectif, et pour comparer la hauteur de son du bruit influencé par l'objet (19) avec ledit au moins un deuxième modèle de référence, en particulier respectif, et pour détecter l'objet (19), terminer le processus d'identification et/ou rejeter l'identification en fonction d'une concordance de la comparaison.

14. Dispositif de détection (11) selon l'une des revendications précédentes,
dans lequel le dispositif de détection (11) comprend un boîtier (25), boîtier (25) dans lequel sont disposés l'unité d'identification (13) et au moins le premier microphone (21), en particulier le deuxième microphone (21) et/ou le module de mémoire.

15. Procédé d'identification d'un objet (19) transporté par un dispositif de transport (17), en particulier par un convoyeur en continu, plus particulièrement par un convoyeur à rouleaux, au moyen d'un dispositif de détection (11) selon l'une des revendications précédentes,
dans lequel l'objet (19) est détecté acoustiquement, en particulier lors du transport, et un processus d'identification pour identifier l'objet (19) est déclenché uniquement lors d'une détection de l'objet (19).
